# FASCICULE DE BREVET EUROPEEN

(11) **EP 0 677 159 B1**
(45) Date de publication et mention de la délivrance du brevet: **12.06.1996**
(21) Numéro de dépôt: 94903923.4
(22) Date de dépôt: 28.12.1993
(51) Int. Cl.: F16L 11/08, B29C 47/26

(54) **CONDUIT MULTICOUCHE ET FILIERE POUR SA FABRICATION**
MEHRSCHICHTROHR UND EXTRUDERDÜSE FÜR SEINE HERSTELLUNG
MULTILAYER DUCT AND DIE FOR PRODUCING SAME

(30) Priorité: 29.12.1992 FR 9216043
(43) Date de publication de la demande: 18.10.1995
(73) Titulaire: ETABLISSEMENTS COURANT SA, F-01570 Manziat (FR)
(72) Inventeur: LEROY, Jean-Marie, F-01570 Feillens (FR); COURANT, Alain, F-01570 Manziat (FR)
(74) Mandataire: Perrier, Jean-Pierre
(86) Numéro de dépôt international: FR9301311
(87) Numéro de publication internationale: WO9415130

(56) Documents cités:
- GB-A- 1 125 742
- US-A- 3 755 032
- US-A- 3 977 440
- US-A- 4 044 799
- US-A- 4 308 895

## Description

L'invention concerne le domaine technique des conduits utilisés pour le transport des gaz, des fluides, tels que l'eau, les eaux pluviales, les eaux usées, mais aussi comme gaine de protection, de conducteurs ou réseaux divers. Elle concerne plus spécialement les conduits ayant un diamètre compris entre 30 et 1000 mm.

Actuellement, la plupart des conduits de ce type sont réalisés en fonte, en acier, en ciment, ou en matière synthétique de forte épaisseur, pour présenter la résistance recherchée. Tous ces conduits présentent soit l'inconvénient de posséder un poids élevé au mètre linéaire, soit, lorsqu'ils sont en polychlorure de vinyle, d'être polluants pour l'environnement, car contenant du chlore.

On connaît aussi des conduits multicouches qui, réalisés en matériaux composites, c'est à dire à partir de matériaux de nature différente, présentent l'inconvénient d'exiger pour leur fabrication des outillages complexes, onéreux et de réglage difficile.

Il en est ainsi des conduits multicouches décrits dans GB-A-1 449 753, US-A-3 977 440 et US-A-4 044 799 qui, composés d'une nappe tubulaire interne, d'une armature de renfort ayant ou non une structure lacunaire, et d'une nappe tubulaire externe, lient l'armature à au moins l'une des nappes en la noyant par fusion dans la nappe externe. L'augmentation des caractéristiques mécaniques des conduits ainsi obtenus, est largement contrebalancée par un accroissement du poids du conduit augmentant la valeur de la flèche lorsque le conduit est posé entre deux appuis. A ces inconvénients, limitant l'application de cette technique de fabrication à des conduits de diamètres inférieurs à 100 mm, s'ajoutent ceux inhérents aux moyens de fabrication qui, nécessitant plusieurs postes et parfois plusieurs têtes d'injection, sont onéreux, complexes et de réglages délicats.

La présente invention a pour but de remédier à ces inconvénients en fournissant un conduit multicouche étanche et résistant, ayant un faible poids au mètre linéaire et pouvant être réalisé dans des matériaux non polluants, incorporant ou non, des produits de récupération.

A cet effet, dans le conduit multicouche selon l'invention, l'armature de renfort présente, sur tout ou partie de sa longueur, une structure lacunaire qui est réticulée, dont seules les faces, respectivement interne et externe, sont liées aux nappes adjacentes, et dont les espaces lacunaires sont obturés mais non remplis par ces nappes.

Ce conduit offre la particularité de posséder une armature lacunaire centrale, formant entretoise entre les nappes adjacentes et sur laquelle sont fixées ces nappes pour former un corps tubulaire parfaitement étanche, léger et résistant.

Selon les formes d'exécution, l'armature et ses nappes sont réalisées dans la même matière synthétique ou dans des matières synthétiques de natures ou de couleurs différentes, issues de granulés vierges ou mélangées à des produits de recyclage.

Dans une forme d'exécution, l'armature en matière synthétique à structure lacunaire est remplacée localement par une couche uniforme de matière pouvant être utilisée pour former une tulipe de raccordement de deux tronçons de conduits.

L'invention concerne également la filière pour la fabrication d'un tel conduit multicouche.

A cet effet, cette filière comprend, en allant de l'intérieur vers l'extérieur :
- d'une part, un premier ensemble d'extrusion formant la nappe intérieure et composé d'un noyau axial délimitant, avec une bague l'entourant, un canal annulaire raccordé, en amont, à un canal d'amenée de matière et débitant, par son extrémité aval, en direction d'un conformateur réfrigéré,
- d'autre part, un deuxième ensemble d'extrusion formant l'armature à structure lacunaire et composé de deux bagues entourant le premier ensemble d'extrusion, et formant un deuxième canal annulaire communiquant, en amont, avec un deuxième canal d'amenée de matière, et, en aval, avec une fente annulaire d'extrusion, au moins l'une de ces bagues comportant, à son extrémité aval, des encoches coopérant avec la fente annulaire, et étant reliée à des moyens aptes à la déplacer par rapport à l'autre bague pour modifier la section transversale de cette fente,
- et, de plus, un troisième ensemble d'extrusion formant la nappe extérieure et composé d'une douille fixe, disposée autour du deuxième ensemble d'extrusion et délimitant, avec un alésage interne ménagé dans le nez de filière, un troisième canal annulaire dont l'extrémité amont communique avec un troisième canal d'amenée de matière, tandis que son extrémité aval débite en direction de l'armature lacunaire plaquée sur la nappe intérieure.

Une telle filière permet de réaliser en continu l'armature à structure lacunaire et les deux nappes adjacentes, respectivement intérieure et extérieure, prenant en sandwich cette armature et venant se plaquer et se lier à elle, lors du refroidissement.

Les trois canaux d'amenée de matière peuvent être raccordés à la même extrudeuse ou à trois extrudeuses différentes. Cette indépendance permet également de n'alimenter que deux des canaux d'amenée, par exemple, le premier et le deuxième canal d'amenée ou le deuxième et le troisième canal pour former un conduit ne comportant qu'une nappe intérieure ou qu'une nappe extérieure associée à l'armature.

D'autres caractéristiques et avantages ressortiront de la description qui suit en référence au dessin schématique annexé, représentant à titre d'exemple non limitatif, une forme d'exécution du conduit multicouche, et d'une forme d'exécution de la filière pour sa fabrication.
Figure 1 est une vue partielle en perspective et avec arrachement montrant une forme d'exécution du conduit multicouche,
Figure 2 en est une vue de côté en coupe transversale,
Figure 3 est une vue en coupe longitudinale d'une forme d'exécution de la filière permettant de fabriquer le conduit multicouche représenté à la figure 1,
Figures 4 à 6 sont des vues partielles de face montrant d'autres formes de réalisation de l'armature,
Figures 7 et 8 sont des vues partielles en coupe montrant des variantes de réalisation de la filière de figure 3,
Figure 9 est une vue partielle de face suivant la flèche IX de figure 7, montrant à échelle agrandie la fente dentelée,
Figure 10 est une vue partielle de côté et en coupe montrant une autre forme de réalisation de la filière,
Figure 11 est une vue partielle en coupe suivant XI-XI de figure 10 montrant, à échelle agrandie, la fente d'extrusion de l'ensemble filière B de figure 10,
Figure 12 est une vue partielle en plan par dessus du conduit obtenu par cette filière,
Figures 13 à 15 sont des vues similaires à celles 10 à 12 montrant une autre forme de réalisation de la filière et du conduit,
Figure 16 est une vue partielle en coupe, montrant à échelle agrandie une autre forme d'exécution du conduit multicouche,
Figure 17 est une vue partielle en coupe longitudinale d'un conduit muni d'un embout d'emmanchement et d'un logement pour embout,
Figures 18 et 19 sont des vues de face en élévation des moyens de formation, respectivement, de l'embout et du logement.

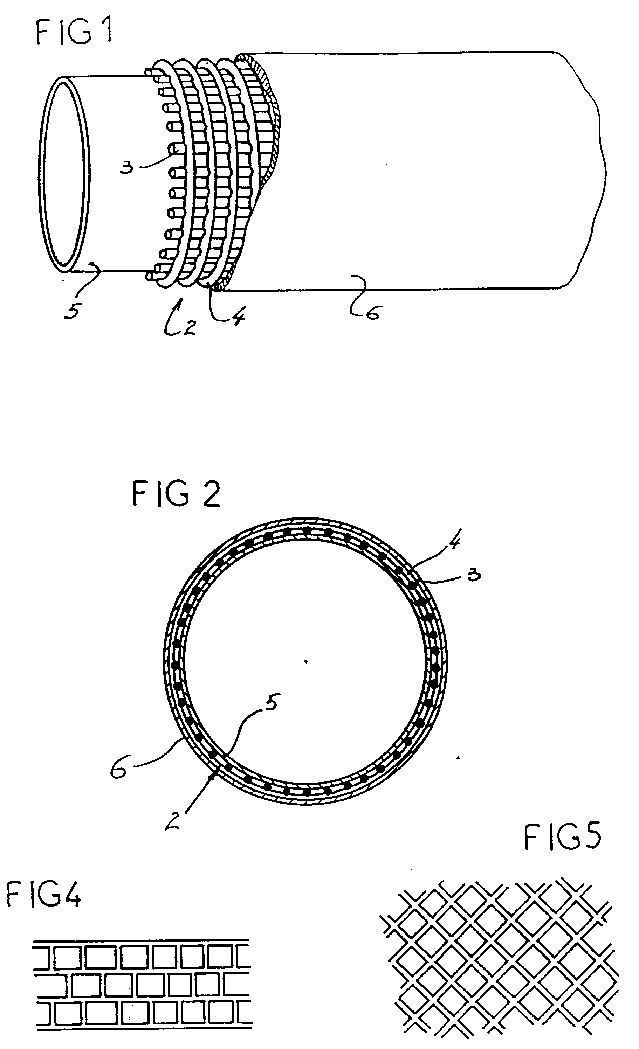

A la figure 1, la référence 2 désigne une armature à structure lacunaire réalisée en matière synthétique et comportant, de façon connue, une structure maillée délimitée par des fils ou cordons longitudinaux 3 et des anneaux circulaires 4, liés aux premiers à intervalle régulier. La référence 5 désigne une nappe intérieure en matière synthétique, tandis que la référence 6 désigne une nappe extérieure, également réalisée en matière synthétique.

Pour la compréhension de l'invention, il est précisé que les expressions nappe intérieure et nappe extérieure désignent les nappes délimitant la paroi du conduit et pouvant, selon les formes d'exécution, être ou non adjacentes à l'armature lacunaire centrale, où à l'une des armatures lacunaires du conduit.

Comme indiqué dans le préambule, la matière constitutive de l'armature 2 et la matière constitutive des nappes 5 et 6 peuvent être identiques ou être différentes par leur nature, leur couleur, ou par toute autre caractéristique. En particulier, l'une des trois couches précitées peut être réalisée dans des matériaux de récupération. De préférence et pour éviter toute pollution, les trois couches sont réalisées dans des polyoléfines et par exemple, en polyéthylène, récupéré ou non.

De par sa structure, et notamment grâce à l'armature 2 prise en sandwich entre les deux nappes 5 et 6, de faible épaisseur et auxquelles la première est liée, ce conduit présente une très bonne rigidité.

De plus, et grâce à la disposition des nappes 5 et 6 contre et de part et d'autre de l'armature lacunaire, sans en remplir les mailles, le conduit composite ainsi obtenu est bien plus léger que les conduits traditionnels en fonte, ciment ou en matière synthétique extrudée.

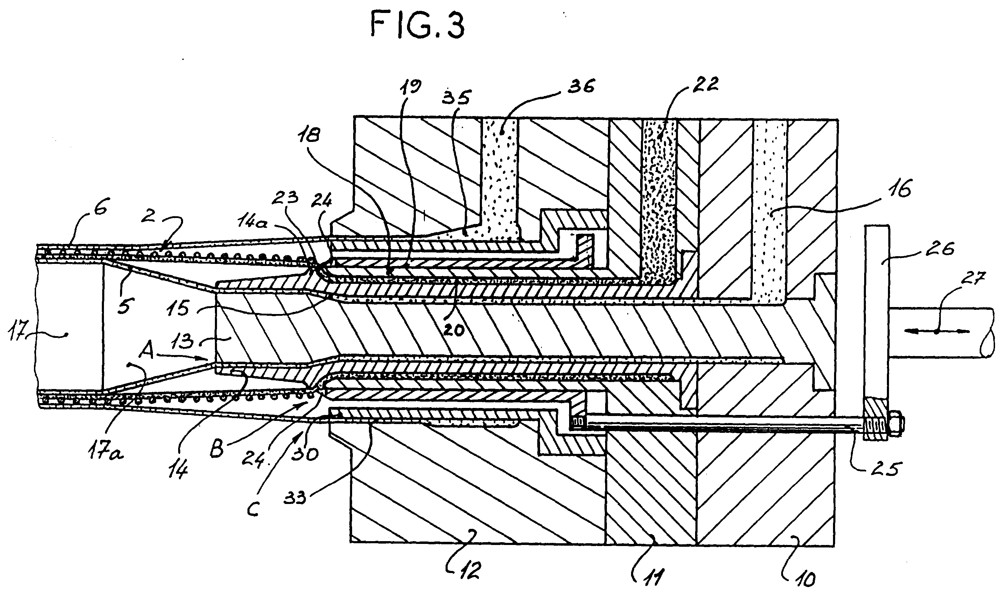

Ce conduit est fabriqué en continu au moyen d'une filière dont une forme d'exécution est représentée à la figure 3. Dans cette figure, les références 10 et 11 désignant des éléments de corps de filière et 12 le nez de filière. Ces éléments sont liés entre eux et fixés sur le bâti d'une installation d'extrusion, non représentée.

Selon l'invention, cette filière comprend un premier ensemble d'extrusion A formant la nappe intérieure 5, un deuxième ensemble d'extrusion B formant l'armature 2 à structure lacunaire, et un troisième ensemble d'extrusion C formant la nappe extérieure 6.

Le premier ensemble d'extrusion A est composé d'un noyau axial 13 et d'une bague centrale 14 l'entourant. Le noyau 13 est fixé au corps 10 par son extrémité amont. Il délimite, avec l'alésage interne de la bague 14, un canal annulaire 15 qui s'étend sur toute sa longueur et est raccordé, en amont, à un premier canal d'amenée de matière 16. Le canal annulaire 15 débouche, en aval, à proximité du convergent 17a d'un conformateur réfrigéré 17, fixé dans le prolongement de la filière pour refroidir et mettre en forme la nappe tubulaire 5 en sortant.

Le deuxième ensemble d'extrusion B est constitué par la bague centrale 14 précitée, par une bague intermédiaire 18 l'entourant et solidaire du corps 11, et par une bague 19 de formation des lacunes, montée coulissante sur la partie extérieure de la bague intermédiaire 18. Les bagues 14 et 18 délimitent entre elles un deuxième canal annulaire 20 communiquant en amont, avec un deuxième canal d'alimentation 22 et débouchant, en aval, par une fente annulaire 23. De façon connue, cette fente annulaire est formée entre un collet 14a de la bague 14 et l'extrémité chanfreinée aval de la bague intermédiaire 18. Elle débouche radialement vers l'extérieur.

La bague 19 comporte à son extrémité libre des encoches 24. Elle est reliée, par une tringlerie 25 traversant les corps 10 et 11, à un plateau de commande 26, disposé hors de la filière et lui-même relié à des moyens moteurs aptes à le déplacer longitudinalement et alternativement dans les deux sens, comme représenté par la flèche 27.

Dans cette forme d'exécution, la bague 19 peut occuper deux positions, à savoir :
- une position aval d'occultation partielle, montrée à la partie inférieure de figure 3, dans laquelle ses encoches 24 sont dans le plan de sortie de la fente annulaire 23 pour former les cordons longitudinaux 3 de la structure lacunaire,
- et une position amont de dégagement total, montrée à la partie supérieure de figure 3, dans laquelle elle est déplacée vers l'amont en permettant à la matière de sortir sur toute la périphérie de la fente annulaire 23 pour former, selon le temps pendant lequel elle est maintenue dans cette position, un anneau 4 de renfort des cordons 3, ou une couche continue de matière.

Cette couche continue de matière qui se substitue localement à la couche lacunaire, renforce le conduit dans les zones où il doit subir un tulipage, c'est à dire être déformé radialement pour présenter une tulipe favorisant le raccordement par emboîtement de deux conduits.

Le troisième ensemble d'extrusion C est composé d'une bague extérieure 30, solidaire du nez 12 de la filière et délimitant, par sa face extérieure et avec un alésage, ménagé dans ce nez, un troisième canal annulaire 33. Ce canal est raccordé à une chambre d'alimentation amont 35, elle-même connectée à un troisième canal 36 d'alimentation en matière. L'extrémité aval du canal annulaire 33 débouche en direction du conformateur 17 et permet ainsi à la nappe extérieure 6 de venir se déposer sur l'armature 2, elle-même en appui sur la nappe intérieure 5, qui circule sur le conformateur.

La figure 3 montre que l'alésage intérieur de la douille extérieure 30 est nettement à distance radiale de la douille d'obturation 19, afin de ne pas gêner les mouvements de celle-ci.

On conçoit aisément que les trois couches sortant de la filière et venant en appui sur le conformateur 17, n'ont pas encore atteintes leur température de solidification et que, de ce fait, elles peuvent se lier les unes aux autres sans apport d'aucun autre agent de liaison.

Les canaux d'alimentation 16-22 et 36 peuvent être raccordés à une même extrudeuse ou à plusieurs extrudeuses, ce qui permet de réaliser, à partir de cette filière, des conduits ayant des couches en matière synthétique de même nature, ou de natures différentes, et cela en fonction des besoins et des contraintes propres à l'utilisation de ce conduit.

Le recours à des extrudeuses différentes permet également d'utiliser des matériaux plastiques de récupération pour constituer, par exemple, la couche la moins visible ou la moins sollicitée, préférentiellement l'armature lacunaire.

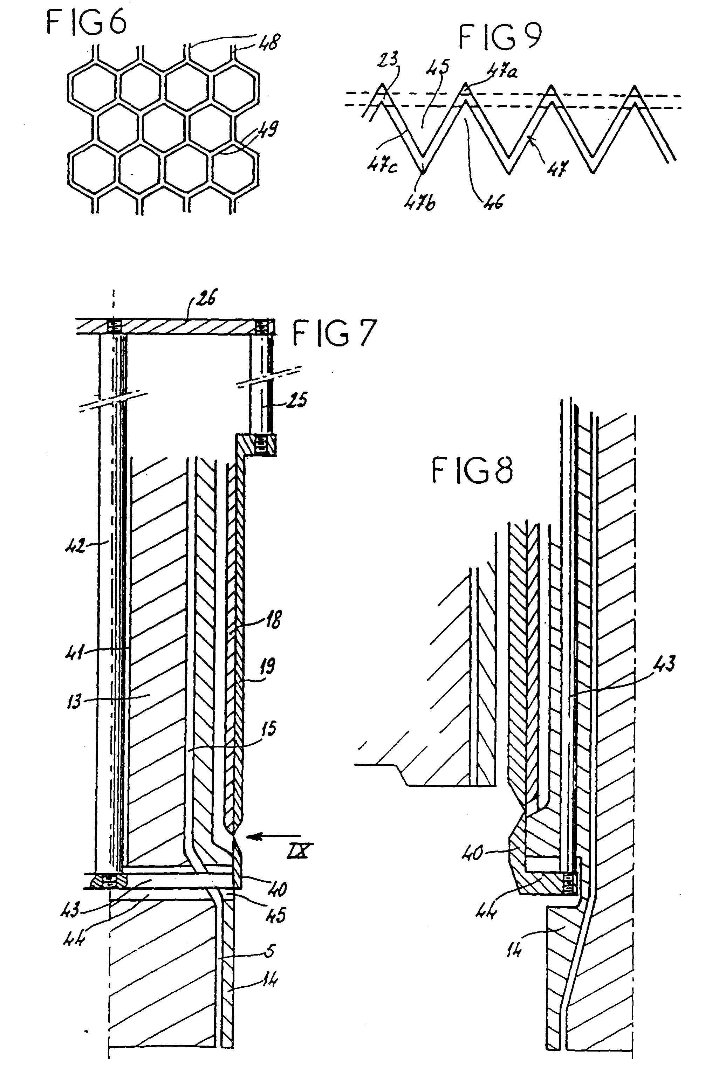

La structure lacunaire formant l'armature 2 peut présenter des mailles différentes de celles représentées à la figure 1 et, par exemple, des mailles carrées en quinconce, des mailles losangiques ou des mailles en nid d'abeille, comme montré aux figures 4, 5 et 6.

Les mailles carrées en quinconce sont obtenues par une variante du dispositif de figure 3, comportant des moyens, non représentés, pour faire pivoter le plateau 26, la tringlerie 25 et la bague 19 autour de l'axe longitudinal de la filière. Cette rotation, dont l'amplitude angulaire a une valeur sensiblement égale à la moitié de la largeur d'une maille, s'effectue, dans un sens ou dans l'autre pendant que la bague 19 est en position amont de dégagement de la fente annulaire 23. Il est évident que dans ces conditions, les tringles 25, traversent les corps 10 et 11 de la filière par des lumières, en arc de cercle ou autre, leur laissant le débattement nécessaire à cette rotation.

Les figures 7 et 8 montrent des variantes de réalisation de la filière de figure 3, variantes permettant de réaliser des mailles losangiques ou en nid d'abeille.

Dans ces deux variantes, la bague 19 de formation des lacunes est associée à une bague 40 qui, disposée en aval d'elle, est liée aux moyens 25 à 27 déplaçant cette douille.

A la figure 7, cette liaison est assurée par une tige axiale 42, liée au plateau 26 et montée libre en translation dans un alésage 41 du noyau 13, et par des bras radiaux 43 disposés avec jeu dans des lumières radiales 44 et 45, respectivement du noyau 13 et de la bague 14. Les bras 43, qui sécantent la fente annulaire 15 et en conséquence la trajectoire de la matière constitutive de la couche 5, ont, en section transversale, un profil lamellaire à bord aigu pour réduire au minimum leur action sur la matière en écoulement. Bien entendu, en aval de cette zone de perturbation, la fente annulaire 15 comporte une zone de compression permettant à la matière d'absorber les fentes réalisées par les bras et de reformer un anneau régulier.

Dans la variante d'exécution de figure 8, la bague 40 est liée au plateau 26 (figure 3), par des tirants 43 montés coulissants verticalement dans la bague 14 et liés à une collerette interne 44 de cette bague.

Dans ces deux formes de réalisation, et comme montré figure 9, les bords en vis à vis respectivement de la bague 19 et de la bague 40 sont munis de dentures s'imbriquant, respectivement 45 et 46, et formés de dents triangulaires, séparées par des encoches en "V", et délimitant entre elles une fente dentelée 47.

Lors de la réalisation de la structure lacunaire de l'armature 2, la bague 19 et la bague 40 sont animées simultanément d'un mouvement de déplacement longitudinal, alternativement, vers l'aval puis vers l'amont, de manière à déplacer la fente dentelée 47 ménagée entre les deux dentures entre une position aval, montrée figure 9, dans laquelle ce qui peut être dénommé le sommet 47a des dents de la fente dentelée 47 est au niveau de la fente annulaire 23 et une position amont dans laquelle ce sont les creux 47b qui sont au niveau de cette fente. Entre ces deux positions, la matière sortant par la fente annulaire 23 se répartit sur les branches 47c entre sommets et creux et forme aussi la maille losangique, montrée figure 5.

Les mailles en nid d'abeille, montrées à la figure 6, sont obtenues par l'une ou l'autre des filières des figures 7 et 8, en arrêtant temporairement le déplacement longitudinal des bagues 19 et 40, à chacune des extrémités de leur course pour former, comme montré à la figure 6, des barreaux 48, reliant les brins 49 formés par les branches 47c de la fente dentelée 47.

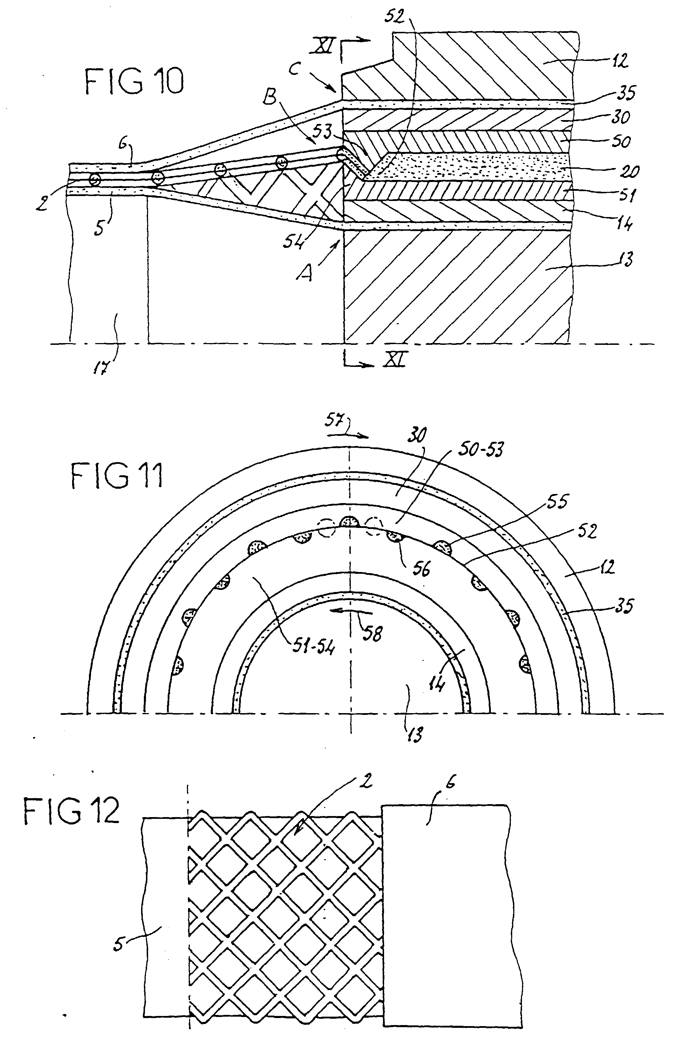

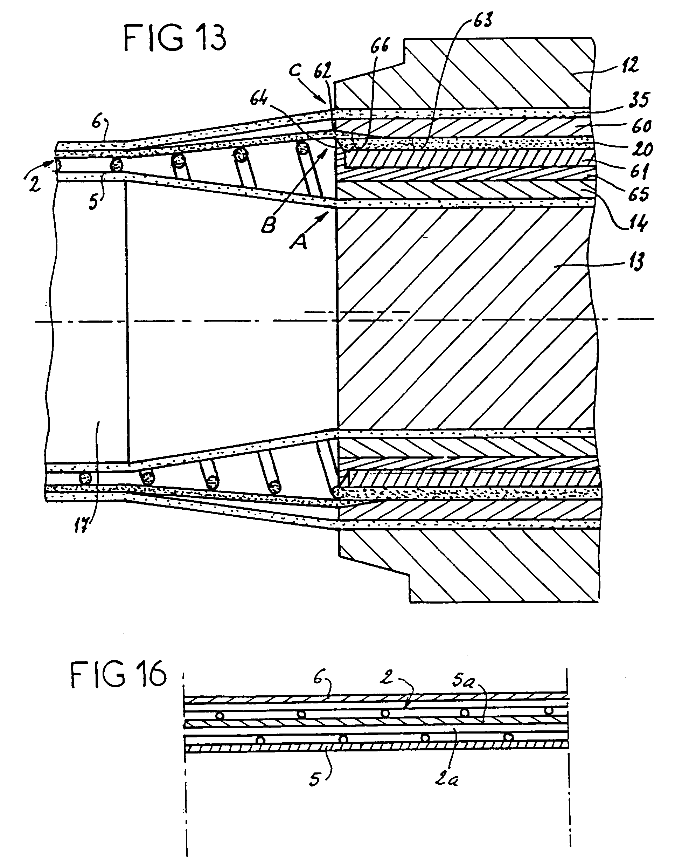

Les figures 10 et 11, et 13 et 14, montrent deux autres formes d'exécution du deuxième ensemble d'extrusion B permettant d'obtenir des structures lacunaires à mailles losangiques. Aux figures 10 et 11, l'ensemble B est composé de deux bagues coaxiales 50, 51 délimitant entre elles le deuxième canal annulaire 20. La fente annulaire d'extrusion 52 est délimitée entre deux portées tronconiques divergentes ménagées sur des collets extrêmes et aval 53 et 54, respectivement, de la bague 50 et de la bague 51. Dans chacune des portées coniques débouchent des encoches radiales 55 et 56 (figure 11) espacées angulairement avec le même pas angulaire.

Chacune des deux bagues 50 et 51 est reliée à des moyens non représentés, mais connus de l'Homme de l'Art, aptes à la faire pivoter en sens inverse de l'autre bague, et par exemple et comme montré figure 11, dans le sens de la flèche 57 pour la bague 50 et dans celui de la flèche 58 pour la bague 51. Lors de ces rotations, chaque encoche 55 et 56 est successivement occultée partiellement par la portée conique en vis à vis, comme montré en traits continus à la figure 11, ou complétée par l'encoche en vis à vis, comme montré en traits mixtes à la même figure. Quand les encoches sont partiellement occultées, elles forment les brins inclinés des mailles losangiques de la structure lacunaire montrée figure 12 et quand elles sont en coïncidence avec les encoches en vis à vis, elles forment les points de croisement des mailles.

Comme dans les formes d'exécution des figures 7 et 8, une interruption temporaire de la rotation des deux bagues 50 et 51 permet d'obtenir des brins longitudinaux donnant une maille en nid d'abeille.

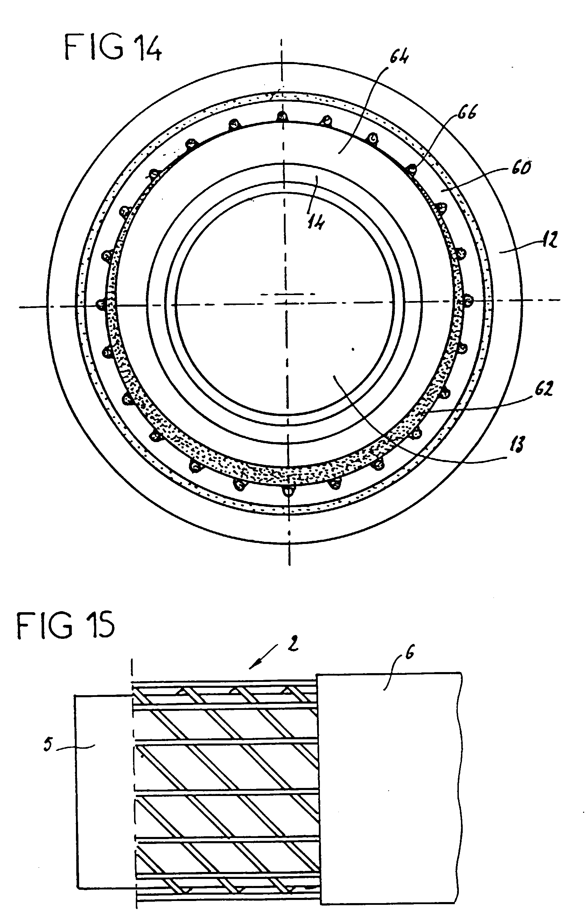

Aux figures 13 et 14, l'ensemble d'extrusion B est composé d'une bague extérieure 60 et d'une bague intérieure 61 coaxiale à la précédente et délimitant, avec elle, le deuxième canal annulaire 20. La fente annulaire d'extrusion 62 est formée entre l'extrémité aval de l'alésage interne 63 de la bague 60 et la périphérie d'un couteau annulaire 64. Le couteau a un diamètre externe plus petit que celui interne de l'alésage 63 et est monté à l'extrémité d'un support tubulaire 65 avec une excentration de son axe longitudinal par rapport à celui de ce support. Ce support est disposé à l'intérieur de la bague 61, entre cette bague et celle 14, du premier ensemble d'extrusion A. Par sa partie amont, le support est relié à des moyens, non représentés, aptes à l'entraîner en rotation autour de la bague 14. La bague extérieure 60 comporte, à l'extrémité aval de son alésage interne, des encoches longitudinales et borgnes 66, débouchant dans cet alésage et de l'extrémité de la bague (figure 14). Ces encoches sont espacées par un pas angulaire constant.

En fonctionnement, dans la partie de la fente annulaire 62 où le couteau annulaire 64 est en contact avec l'alésage 63, comme montré à la partie supérieure de la figure 14, seules les encoches 66 débitent des cordons longitudinaux de matière ; tandis que, dans la partie opposée de la fente 62, la matière est débitée par les encoches 66, mais aussi par la fente 62 qui, par le mouvement du couteau 64, forme un cordon hélicoïdal à l'intérieur du cylindre fictif délimité par les cordons longitudinaux. La structure lacunaire ainsi obtenue est montrée à la figure 15.

On notera que des résultats similaires peuvent être obtenus en réalisant les encoches 66 à la périphérie du couteau 64, et en dotant la bague externe 60 d'un alésage lisse sur toute sa longueur.

Dans une variante de cette forme de réalisation, le couteau annulaire 64 est coaxial à son support tubulaire 65 qui est alors monté libre en rotation sur une portée de la bague 14, cette portée étant elle-même excentrée par rapport à l'axe longitudinal de cette bague.

Dans une autre variante, avec couteau 64 coaxial au support 65, le support est monté avec jeu radial entre les bagues 14 et 61 et est relié à des moyens aptes à lui communiquer une nutation, c'est à dire un mouvement sensiblement pendulaire déplaçant la périphérie du couteau contre l'alésage 63 de la bague externe 60.

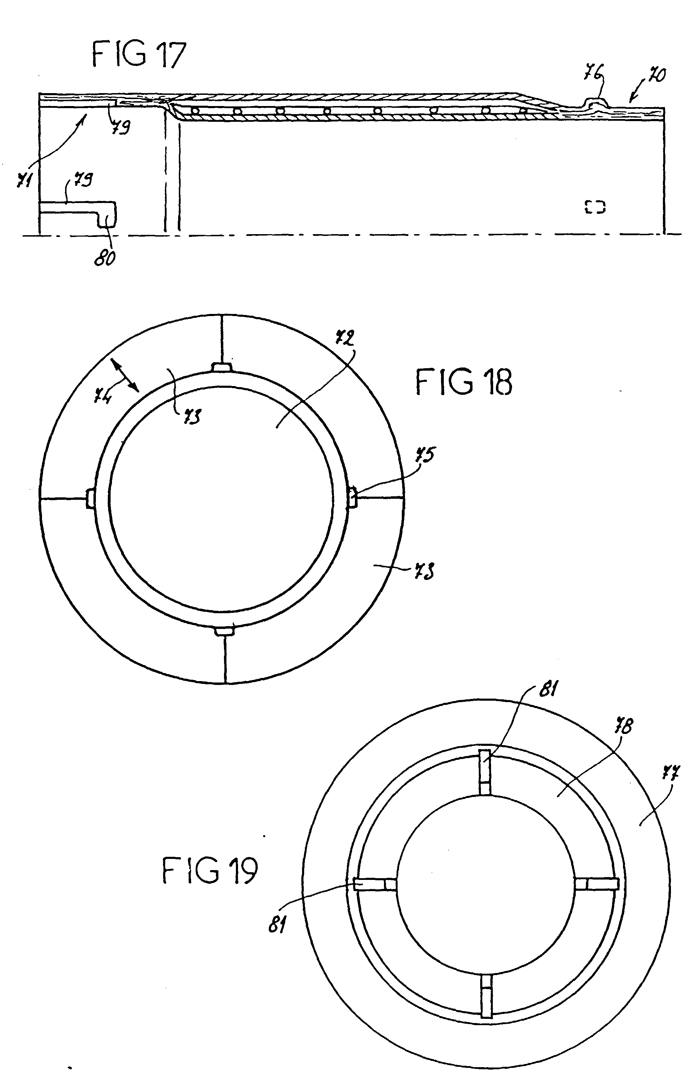

La figure 16 montre une forme d'exécution d'un conduit multicouche à cinq couches. Ce conduit comporte entre l'armature de renfort 2, liée à la nappe extérieure 6, et la nappe intérieure 5, une nappe intermédiaire 5a et une seconde armature de renfort 2a. La nappe intermédiaire 5a est liée par fusion à la seconde armature de renfort 2a qui est, elle-même, liée par fusion à la nappe intérieure 5.

Le remplacement d'une armature lacunaire unique par deux armatures lacunaires permet de réduire les dimensions transversales des brins des structures lacunaires. Cela a pour avantage de réduire la quantité de chaleur accumulée dans les brins, et en particulier dans ceux venant en contact avec les nappes respectivement intérieure 5 et extérieure 6 et ainsi de faciliter le refroidissement de ces nappes. En pratique, cette structure multicouche évite la formation de zones de retrait visibles à la surface des nappes et permet d'obtenir des surfaces lisses et continues.

De préférence, les mailles des deux armatures de renfort 5 et 5a à structure lacunaire sont décalées, transversalement et longitudinalement, de manière que les points de croisement d'une armature soient entre les mailles de l'autre armature et ceci afin, d'une part, de répartir les zones de concentration de chaleur en sortie de filière et, d'autre part, d'améliorer la résistance du complexe obtenu.

La figure 17 montre un conduit à trois couches obtenu par sectionnement en tronçon du produit sortant de l'une quelconque des filières décrites ci-dessus et conformé pour permettre sa liaison par emmanchement avec un conduit identique. Ce conduit comporte, à l'une de ses extrémités, un embout d'emmanchement 70 et, à son autre extrémité, un logement 71 d'accueil de cet embout.

L'embout 70 a un diamètre extérieur inférieur à celui extérieur du conduit, tandis que le logement 71 a un diamètre intérieur supérieur à celui intérieur de ce même conduit et égal, au jeu fonctionnel près à celui extérieur de l'embout.

Cet embout 70 est obtenu en portant l'extrémité correspondante du conduit à une température au moins égale à la température de ramollissement des matières composant ses couches et en l'engageant dans le montage représenté à la figure 18 et composé d'un poinçon axial 72 et de mâchoires 73. Le poinçon 72 a un diamètre intérieur égal à celui du conduit. Les mâchoires 73 sont mobiles radialement, dans le sens de la flèche 74, entre une position dans laquelle elles tolèrent l'engagement de l'extrémité du conduit et une position de fin de compression. Lors de leur serrage sur l'extrémité du conduit, elles écrasent les brins composants l'armature de renfort 2 en les laminant entre les nappes 5 et 6, qui subissent également un laminage au moins partiel.

Cette compression-laminage est suffisamment forte pour former, si cela est nécessaire et au moyen de matrices 75 ménagées dans les mâchoires, un ou plusieurs tenons 76 saillant radialement de l'embout.

En fin d'opération, l'embout est composé d'une paroi renforcée, en général pleine.

La préparation du logement 71 s'effectue dans les mêmes conditions mais au moyen du montage représenté à la figure 19, et comprenant une couronne externe 77 et un poinçon interne 78. L'extrémité du conduit est engagée dans la couronne 77, qui assure son calibrage externe, comme le poinçon 72 assure le calibrage interne de l'embout 70. Elle est déformée radialement par introduction dans son alésage interne du poinçon 78, ayant un diamètre externe plus grand que celui interne du conduit et égal à celui interne du logement 71. Cet effort radial provoque également la compression et le laminage des brins de l'armature de renfort 2 entre les nappes 5 et 6.

Lorsque le logement 71 est muni de rainures longitudinales 79, avec cran de verrouillage 80 pour les tenons 76, ces rainures et crans sont formés par des empreintes 81, mobiles radialement dans le poinçon 78 et reliées à des moyens aptes à les déplacer entre une position d'effacement dans le mandrin et une position de travail, dans laquelle elles font saillie de ce mandrin et déforment localement la paroi renforcée réalisée à cette extrémité.

On notera que, grâce à ses lacunes, l'armature de renfort 2 permet de conformer les extrémités du conduit en mettant en oeuvre des pressions pouvant être obtenues par des moyens mécaniques simples, fiables et peu onéreux, et d'obtenir, dans les zones d'emmanchement ne nécessitant pas une déformabilité, des parois rigides et résistantes favorisant la liaison des conduits.

La possibilité de réaliser sur les embouts 70 et logements 71, pendant leur formation, des moyens 76, 79, 80 assurant ultérieurement la liaison positive des divers tronçons, est particulièrement intéressante pour les conduits comprenant une nappe intérieure et/ou une nappe extérieure en polyéthylène, connu pour être difficilement assemblable par collage.

Dans une variante, les rainures 79 sont en hélices. Cette disposition permet, en communiquant une poussée longitudinale, par exemple au moyen du godet d'une pelleteuse, sur l'extrémité libre d'un conduit, de communiquer à son autre extrémité les mouvements de translation et de rotation favorisant le verrouillage de tenons 76 dans les encoches 80. Cet aménagement est particulièrement intéressant pour les conduits ayant un diamètre supérieur à 400 mm et difficilement saisissables par un seul homme.

Le conduit selon l'invention peut être utilisé pour transporter des gaz, des fluides, des sons, mais aussi pour constituer gaine de protection de conducteurs ou de réseaux divers. Quelle que soit son application, à résistance égale de celle des conduits actuels en matériaux divers, il présente une plus grande légèreté qui permet d'envisager son application à partir de très petits diamètres de l'ordre de 30 mm jusqu'à des diamètres de l'ordre de 1000 mm qui, jusqu'à présent, ne pouvaient pas être envisagés dans les tronçons de longueur courante, en raison de leur poids.

## Revendications

1. Conduit multicouche comprenant au moins une nappe tubulaire interne en matière synthétique, une armature de renfort en matière synthétique ayant une structure lacunaire, et une nappe externe en matière synthétique, et dans lequel au moins l'une des nappes est liée par fusion à l'armature, **caractérisé en ce que** l'armature (2) de renfort présente, sur tout ou partie de sa longueur, une structure lacunaire qui est réticulée, dont seules les faces, respectivement interne et externe, sont liées aux nappes adjacentes (5-6), et dont les espaces lacunaires sont obturés mais non remplis par ces nappes.

2. Conduit selon la revendication 1, **caractérisé en ce qu**'il ne comporte qu'une armature de renfort (2) incluse entre les nappes, respectivement interne (5) et externe (6), et liée à ces nappes.

3. Conduit selon l'une quelconque des revendications 1 et 2, **caractérisé en ce que** l'armature (2) et sa ou ses nappes (5-6) sont réalisées dans la même matière synthétique.

4. Conduit selon l'une quelconque des revendications 1 et 2, **caractérisé en ce que**, au moins l'une de ses nappes (5-6) est réalisée dans une matière synthétique différente de celle de son armature (2).

5. Conduit selon l'une quelconque des revendications 1 à 4, **caractérisé en ce que** l'armature (2) à structure lacunaire est remplacée par une couche uniforme de matière, à l'une ou aux extrémités du conduit.

6. Conduit selon l'une quelconque des revendications 1 à 4, **caractérisé en ce qu**'il comporte :
- à l'une de ses extrémités un embout d'emmanchement (70), de diamètre extérieur inférieur au sien, et ayant une paroi renforcée formée par engagement de cette extrémité, alors portée à la température de ramollissement des matières constituant ses couches, entre un poinçon axial (72) et des mâchoires extérieures radiales (73) aptes à la comprimer en écrasant et laminant l'armature de renfort (2) et la nappe externe (6) contre la nappe interne (5),
- et, à son autre extrémité, un logement (71) de réception de l'embout (70) ayant un diamètre interne supérieur à celui du tronçon de conduit et comportant une paroi renforcée formée par engagement dans cette extrémité, alors portée à la température de ramollissement des matières constituant ses couches et disposée dans une couronne externe (77), d'un poinçon axial (78) apte à comprimer radialement cette extrémité en écrasant et laminant l'armature de renfort (2) et sa nappe interne (5) contre la nappe externe (6).

7. Conduit selon la revendication 6, **caractérisé en ce que** son embout (70) comporte au moins un tenon (76), saillant radialement vers l'extérieur, formé en même temps que lui, tandis que son logement d'accueil (71) pour un embout comporte au moins une rainure (79) qui, formée en même temps que le logement (71), communique avec un cran transversal (80) de verrouillage du tenon d'un embout.

8. Conduit selon l'une quelconque des revendications 1 à 5, **caractérisé en ce qu**'il comporte entre l'armature de renfort (2) et la nappe intérieure (5), une nappe intermédiaire (5a) liée par fusion, d'un côté à l'armature (2) et de l'autre côté à une seconde armature de renfort lacunaire (2a) cette seconde armature étant elle-même liée par fusion, à la nappe intérieure (5).

9. Conduit selon la revendication 8, **caractérisé en ce que** les mailles de la seconde armature lacunaire (2a) sont décalées longitudinalement et transversalement par rapport aux mailles de la première armature (2).

10. Filière pour la fabrication d'un conduit multicouches selon l'une quelconque des revendications 1 à 5, **caractérisée en ce qu**'elle comprend, en amont d'un conformateur réfrigéré (17) et allant de l'intérieur vers l'extérieur :
- d'une part, un premier ensemble d'extrusion (A) formant la nappe intérieure (5) et composé d'un noyau axial (13) délimitant, avec une bague (14) l'entourant, un canal annulaire (5) raccordé, en amont, à un premier canal (16) d'amenée de matière, et débitant, par son extrémité aval, en direction du conformateur réfrigéré (17),
- d'autre part, un deuxième ensemble d'extrusion (B) formant l'armature à structure lacunaire et composé de deux bagues (18-19, 50-51, 60-61) entourant le premier ensemble d'extrusion (A), et formant un deuxième canal annulaire (20) communiquant, en amont, avec un deuxième canal (22) d'amenée de matière, et, en aval, avec une fente annulaire d'extrusion (23, 52, 62), au moins l'une de ces bagues comportant, à son extrémité aval, des encoches (24, 56, 66) coopérant avec la fente annulaire (23), et étant reliée à des moyens aptes à la déplacer par rapport à l'autre bague pour modifier la section transversale de cette fente (23, 56, 60),
- et, de plus, un troisième ensemble d'extrusion (C) formant la nappe extérieure (6) et composé d'une douille fixe (30) disposée autour du deuxième ensemble d'extrusion (19) et délimitant, avec un alésage interne ménagé dans le nez de filière, un canal annulaire (33) dont l'extrémité amont communique avec un troisième canal (36) d'amenée de matière, tandis que son extrémité aval débite en direction de l'armature lacunaire (2) plaquée sur la nappe intérieure (5).

11. Filière selon la revendication 10, **caractérisée en ce que** le deuxième ensemble d'extrusion (B) est composé d'une bague (18) entourant la bague (14) du premier ensemble d'extrusion (C) avec lequel elle forme le deuxième canal annulaire (20), et d'une bague (19) de formation des lacunes qui, munie à son extrémité aval des encoches (24), est montée coulissante sur la bague (18) et est reliée à des moyens (25 à 27) aptes à la déplacer en translation longitudinale et alternativement entre une position amont, de dégagement de la fente annulaire (23), et une position aval, d'obturation partielle de cette fente (23).

12. Filière selon la revendication 10, **caractérisée en ce que** le deuxième ensemble d'extrusion (B) est composé d'une bague (18) entourant la bague (14) du premier ensemble d'extrusion (C) avec lequel elle forme !e deuxième canal annulaire (20), et d'une bague (19) de formation des lacunes qui, munie à son extrémité aval des encoches (24), est montée sur la bague (18) avec possibilité de rotation et est reliée à des moyens (25-26) aptes à la faire pivoter alternativement dans un sens ou dans l'autre, et avec une amplitude angulaire sensiblement égale à la moitié de la largeur d'une maille de la structure lacunaire (2).

13. Filière selon la revendication 10, **caractérisée en ce que** la bague (19) de formation de la structure lacunaire est associée à une bague (40) disposée en aval d'elle et liée aux moyens (25 à 26) commandant ses mouvements longitudinaux, tandis que les bords en vis à vis des deux bagues (19) et (40) sont munies de dentures (45-46) s'imbriquant l'une dans l'autre en délimitant une fente dentelée (47) coopérant avec la fente annulaire (23) du deuxième ensemble filière.

14. Filière selon la revendication 10, **caractérisée en ce que** le deuxième ensemble d'extrusion (B) est composé de deux bagues (50, 51), coaxiales, délimitant entre elles le deuxième canal annulaire (20) et, par des portées tronconiques divergentes ménagées à leurs extrémités aval (53-54), une fente annulaire d'extrusion (52), tandis que, d'une part, de chacune des portées tronconiques des bagues (50, 51) débouchent des encoches radiales (55-56), espacées angulairement avec le même pas angulaire et que, d'autre part, chaque bague (50, 51) est reliée à des moyens aptes à la faire pivoter en sens inverse de l'autre bague.

15. Filière selon la revendication 10, **caractérisée en ce que** le deuxième ensemble d'extrusion (B) est composé de deux bagues coaxiales (60-61), formant entre elles le canal annulaire (20), et d'un couteau annulaire (64) qui, de diamètre extérieur inférieur à celui interne de l'alésage de la bague externe (60) avec lequel il délimite une fente annulaire d'extrusion (62), est calé excentré sur un support tubulaire (65), relié à des moyens aptes à l'entraîner en rotation, tandis que des encoches longitudinales (66), réparties avec un pas angulaire constant, débouchent de l'une des faces délimitant la fente annulaire d'extrusion (62).

## Patentansprüche

1. Mehrschicht-Rohr, umfassend mindestens einen rohrförmigen inneren Mantel aus Kunststoff, eine Verstärkungsbewehrung aus Kunststoff mit einer lückenhaften Struktur sowie einen äußeren Mantel aus Kunststoff, wobei wenigstens einer der Mäntel durch Verschmelzung mit der Bewehrung verbunden ist,
**dadurch gekennzeichnet**,
daß die Verstärkungsbewehrung (2) auf ihrer ganzen Länge oder einem Teil ihrer Länge eine lückenhafte Struktur aufweist, die netzartig ist, bei der allein die Innen-bzw. Außenseiten mit benachbarten Mänteln (5 - 6) verbunden sind und bei der die lückenartigen Zwischenräume durch die Mäntel verdeckt, aber nicht ausgefüllt sind.

2. Rohr nach Anspruch 1,
dadurch gekennzeichnet,
daß es nur eine Verstärkungsbewehrung (2) umfaßt, welche zwischen dem inneren (5) und dem äußeren (6) Mantel eingeschlossen ist und mit diesen Mänteln verbunden ist.

3. Rohr nach einem der Ansprüche 1 und 2,
dadurch gekennzeichnet,
daß die Bewehrung (2) und der oder die Mäntel (5 - 6) des Rohrs aus dem gleichen Kunststoff gefertigt sind.

4. Rohr nach einem der Ansprüche 1 und 2,
dadurch gekennzeichnet,
daß wenigstens einer der Mäntel (5 - 6) des Rohrs aus einem anderen Kunststoff als die Bewehrung (2) des Rohrs gefertigt ist.

5. Rohr nach einem der Ansprüche 1 bis 4,
dadurch gekennzeichnet,
daß die Bewehrung (2) mit der lückenhaften Struktur an einem oder beiden Enden des Rohrs durch eine gleichförmige Materialschicht ersetzt ist.

6. Rohr nach einem der Ansprüche 1 bis 4,
dadurch gekennzeichnet,
daß es umfaßt:
- an einem seiner Enden einen Steckansatz (70) mit einem Außendurchmesser, der kleiner als derjenige des Rohrs ist, und mit einer verstärkten Wand, welche durch Einbringen dieses Endes - nachdem es auf die Temperatur gebracht wurde, bei der die seine Schichten bildenden Materialien weich werden - zwischen einen axialen Kern (72) und radial äußere Backen (73) gebildet ist, die zur Komprimierung dieses Endes ausgebildet sind, wobei die Verstärkungsbewehrung (2) und der äußere Mantel (6) an dem inneren Mantel (5) zerdrückt und flachgewalzt werden,
- und an seinem anderen Ende einen Sitz (71) zur Aufnahme des Ansatzes (70) mit einem Innendurchmesser, der größer als derjenige des Rohrstücks ist, und mit einer verstärkten Wand, welche durch Einbringen eines axialen Kerns (78) in dieses Ende - nachdem es auf die Temperatur gebracht wurde, bei der die seine Schichten bildenden Materialien weich werden, und in einem äußeren Kranz (77) angeordnet wurde - gebildet ist, wobei der axiale Kern (78) zur radialen Komprimierung dieses Endes ausgebildet ist, wobei die Verstärkungsbewehrung (2) und der innere Mantel (5) des Rohrs an dem äußeren Mantel (6) zerdrückt und flachgewalzt werden.

7. Rohr nach Anspruch 6,
dadurch gekennzeichnet,
daß sein Ansatz (70) mindestens eine Nase (76) aufweist, welche radial nach außen vorspringt und gleichzeitig mit dem Ansatz (70) gebildet wird, während sein Aufnahmesitz (71) für einen Ansatz mindestens eine Nut (79) aufweist, die gleichzeitig mit dem Sitz (71) gebildet wird und mit einer Queraussparung (80) zur Verrastung der Nase eines Ansatzes in Verbindung steht.

8. Rohr nach einem der Ansprüche 1 bis 5,
dadurch gekennzeichnet,
daß es zwischen der Verstärkungsbewehrung (2) und dem inneren Mantel (5) einen Zwischenmantel (5a) aufweist, welcher einerseits mit der Bewehrung (2) und anderseits mit einer zweiten lückenhaften Verstärkungsbewehrung (2a) durch Verschmelzung verbunden ist, wobei diese zweite Bewehrung ihrerseits durch Verschmelzung mit dem inneren Mantel (5) verbunden ist.

9. Rohr nach Anspruch 8,
dadurch gekennzeichnet,
daß die Maschen der zweiten lückenhaften Bewehrung (2a) in Längs- und in Querrichtung gegenüber den Maschen der ersten Bewehrung (2) versetzt sind.

10. Düse zur Herstellung eines Mehrschicht-Rohrs nach einem der Ansprüche 1 bis 5,
dadurch gekennzeichnet,
daß sie stromaufwärts einer Abkühlvorrichtung (17) und von innen nach außen umfaßt:
- einerseits eine erste Extrusionseinheit (A), welche den Innenmantel (5) bildet und aus einem axialen Kern (13) aufgebaut ist, der zusammen mit einem diesen umgebenden Ringteil (14) einen Ringkanal (5) begrenzt, welcher stromaufwärts an einen ersten Materialzufuhrkanal (16) angeschlossen ist und mit seinem stromabwärtigen Ende in Richtung der Abkühlvorichtung (17) ausmündet,
- andererseits eine zweite Extrusionseinheit (B), welche die Bewehrung mit der lückenhaften Struktur bildet und aus zwei Ringteilen (18 - 19, 50 - 51, 60 - 61) aufgebaut ist, die die erste Extrusionseinheit (A) umgeben und einen zweiten Ringkanal (20) bilden, welcher stromaufwärts mit einem zweiten Materialzufuhrkanal (22) und stromabwärts mit einem Extrusionsringspalt (23, 52, 62) in Verbindung steht, wobei wenigstens eines dieser Ringteile an seinem stromabwärtigen Ende mit dem Ringspalt (23) zusammenwirkende Ausnehmungen (24, 56, 66) aufweist und mit Mitteln verbunden ist, die zu seiner Verlagerung gegenüber dem anderen Ringteil ausgebildet sind, um den Querschnitt dieses Spalts (23, 56, 60) zu verändern,
- und darüber hinaus eine dritte Extrusionseinheit (C), welche den äußeren Mantel (6) bildet und aus einer festen Hülse (30) aufgebaut ist, die um die zweite Extrusionseinheit (19) herum angeordnet ist und zusammen mit einem im Vorderteil der Düse ausgebildeten Innendurchgang einen Ringkanal (33) begrenzt, dessen stromaufwärtiges Ende mit einem dritten Materialzufuhrkanal (36) in Verbindung steht, während dessen stromabwärtiges Ende in Richtung der auf den inneren Mantel (5) aufgelegten lückenhaften Bewehrung (2) ausmündet.

11. Düse nach Anspruch 10,
dadurch gekennzeichnet,
daß die zweite Extrusionseinheit (B) aus einem Ringteil (18) aufgebaut ist, welches das Ringteil (14) der ersten Extrusionseinheit (C) umgibt, mit dem es den zweiten Ringkanal (20) bildet, sowie aus einem Ringteil (19) zur Bildung der Lücken aufgebaut ist, welches an seinem stromabwärtigen Ende mit Ausnehmungen (24) versehen ist, verschiebbar auf dem Ringteil (18) angebracht ist und mit Mitteln (25 bis 27) verbunden ist, die zu seiner Verlagerung in Längsrichtung abwechselnd zwischen einer stromaufwärtigen Position, in welcher es den Ringspalt (23) freigibt, und einer stromabwärtigen Position, in welcher es diesen Spalt (23) teilweise verschließt, ausgebildet sind.

12. Düse nach Anspruch 10,
dadurch gekennzeichnet,
daß die zweite Extrusionseinheit (B) aus einem Ringteil (18) aufgebaut ist, welches das Ringteil (14) der ersten Extrusionseinheit (C) umgibt, mit dem es den zweiten Ringkanal (20) bildet, sowie aus einem Ringteil (19) zur Bildung der Lücken aufgebaut ist, welches an seinem stromabwärtigen Ende mit Ausnehmungen (24) versehen ist, drehbar auf dem Ringteil (18) angebracht ist und mit Mitteln (25 - 26) verbunden ist, welche dazu ausgebildet sind, das Ringteil (19) abwechselnd in der einen oder der anderen Richtung verdrehen zu lassen, und zwar mit einer Winkelamplitude, die im wesentlichen gleich der Hälfte der Größe einer Masche der lückenhaften Struktur (2) ist.

13. Düse nach Anspruch 10,
dadurch gekennzeichnet,
daß dem Ringteil (19) zur Bildung der lückenhaften Struktur ein Ringteil (40) zugeordnet ist, welches stromabwärts desselben angeordnet ist und mit Mitteln (25 bis 26) verbunden ist, die seine Bewegungen in Längsrichtung steuern, wobei die sich gegenüberliegenden Ränder der beiden Ringteile (19) und (40) mit Verzahnungen (45 - 46) versehen sind, welche ineinandergreifen und dabei einen sägezahnförmigen Spalt (47) begrenzen, der mit dem Ringspalt (23) der zweiten Einheit der Düse zusammenwirkt.

14. Düse nach Anspruch 10,
dadurch gekennzeichnet,
daß die zweite Extrusionseinheit (B) aus zwei koaxialen Ringteilen (50, 51) aufgebaut ist, welche zwischen sich den zweiten Ringkanal (20) begrenzen und mit an ihren stromabwärtigen Enden ausgebildeten, nach außen laufenden Kegelflächen (53 - 54) einen Extrusionsringspalt (52) begrenzen, wobei einerseits von jeder der Kegelflächen der Ringteile (50, 51) radiale Ausnehmungen (55 - 56) ausmünden, welche mit gleichem Winkelabstand voneinander angeordnet sind, und wobei andererseits jedes Ringteil (50, 51) mit Mitteln verbunden ist, welche zu seiner Verdrehung in Gegenrichtung zum anderen Ringteil ausgebildet sind.

15. Düse nach Anspruch 10,
dadurch gekennzeichnet,
daß die zweite Extrusionseinheit (B) aus zwei koaxialen Ringteilen (60 - 61) aufgebaut ist, welche zwischen sich den Ringkanal (20) bilden, sowie einer Ringschneide (64) aufgebaut ist, deren Außendurchmesser kleiner als der Innendurchmesser des Durchgangs des äußeren Ringteils (60) ist, mit dem sie einen Extrusionsringspalt (62) begrenzt, und die exzentrisch auf einer rohrförmigen Halterung (65) fixiert ist, welche mit Mitteln verbunden ist, die zum Drehantrieb der rohrförmigen Halterung (65) ausgebildet sind, wobei von einer der den Extrusionsringspalt (62) begrenzenden Flächen Längsausnehmungen (66) ausmünden, welche mit konstantem Winkelabstand verteilt sind.

## Claims

1. Multilayer pipe comprising at least one internal tubular ply made from synthetic material, one strengthening reinforcement member made from synthetic material having a lacunary structure and one external ply made from synthetic material, and in which at least one of the plies is bonded, by melting, to the reinforcement member, characterized in that the strengthening reinforcement member (2) has, over the whole or part of its length, a lacunary structure which is reticulated, only the respectively internal and external faces of which are bonded to the adjacent plies (5-6) and the lacunary spaces of which are blocked off, but not filled, by these plies.

2. Pipe according to Claim 1, characterized in that it possesses only one strengthening reinforcement member (2) included between the respectively internal (5) and external (6) plies and bonded to these plies.

3. Pipe according to either of Claims 1 and 2, characterized in that the reinforcement member (2) and its ply or plies (5-6) are produced in the same synthetic material.

4. Pipe according to either of Claims 1 and 2, characterized in that at least one of its plies (5-6) is produced in a synthetic material other than that of its reinforcement member (2).

5. Pipe according to any one of Claims 1 to 4, characterized in that the lacunary-structure reinforcement member (2) is replaced by a uniform layer of material at one end or at the ends of the pipe.

6. Pipe according to any one of Claims 1 to 4, characterized in that it includes:
- at one of its ends, a fitting endpiece (70), of outer diameter less than its own, and having a reinforced wall formed by engagement of this end, then raised to the softening point of the materials constituting its layers, between an axial ram (72) and radial outer jaws (73) capable of compressing it, thereby squashing and laminating the strengthening reinforcement member (2) and the external ply (6) against the internal ply (5);
- and, at its other end, a housing (71) for receiving the endpiece (70) having an internal diameter greater than that of the length of pipe and including a reinforced wall formed by engagement in this end, then raised to the softening point of the materials constituting its layers and placed in an external collar (77), of an axial ram (78) capable of compressing this end radially, thereby squashing and laminating the strengthening reinforcement member (2) and its internal ply (5) against the external ply (6).

7. Pipe according to Claim 6, characterized in that its endpiece (70) includes at least one tenon (76) projecting radially towards the outside, formed at the same time as it, whereas its reception housing (71) for an endpiece includes at least one groove (79) which, formed at the same time as the housing (71), communicates with a transverse catch (80) for locking the tenon of an endpiece.

8. Pipe according to any one of Claims 1 to 5, characterized in that it includes, between the strengthening reinforcement member (2) and the inner ply (5), an intermediate ply (5a) bonded, by melting, on one side to the reinforcement member (2) and on the other side to a second lacunary reinforcement member (2a), this second reinforcement member being itself bonded, by melting, to the inner ply (5).

9. Pipe according to Claim 8, characterized in that the mesh cells of the second lacunary reinforcement member (2a) are offset longitudinally and transversely in relation to the mesh cells of the first reinforcement member (2).

10. Die for the manufacture of a multilayer pipe according to any one of Claims 1 to 5, characterized in that it comprises, upstream of a chilled sizing-die unit (17) and going from the inside to the outside:
- on the one hand, a first extrusion assembly (A) forming the inner ply (5) and composed of an axial core (13) delimiting, with a sleeve (14) surrounding it, an annular channel (5) joined, upstream, to a first material supply channel (16) and running out, via its downstream end, towards a chilled sizing-die unit (17);
- on the other hand, a second extrusion assembly (B) forming the lacunary-structure reinforcement member and composed of two sleeves (18-19, 50-51, 60-61) surrounding the first extrusion assembly (A), and forming a second annular channel (20) communicating, upstream, with a second material supply channel (22) and, downstream, with an extrusion annulus (23, 52, 62), at least one of these sleeves including, at its downstream end, notches (24, 56, 66) interacting with the annulus (23), this sleeve being connected to means capable of moving it in relation to the other sleeve in order to alter the cross-section of this annulus (23, 56, 60);
- and, in addition, a third extrusion assembly (C) forming the outer ply (6) and composed of a fixed bush (30) placed around the second extrusion assembly (19) and delimiting, with an internal bore made in the die head, an annular channel (33), the upstream end of which communicates with a third material supply channel (36) whereas its downstream end runs out towards the lacunary reinforcement member (2) pressed against the inner ply (5).

11. Die according to Claim 10, characterized in that the second extrusion assembly (B) is composed of a sleeve (18) surrounding the sleeve (14) of the first extrusion assembly (A) with which it forms the second annular channel (20), and of a sleeve (19) for forming the lacunae, which sleeve, equipped at its downstream end with notches (24), is mounted so as to slide over the sleeve (18) and is connected to means (25 to 27) capable of moving it in longitudinal and alternating translation between an upstream position, for clearing the annulus (23), and a downstream position for partially closing off this annulus (23).

12. Die according to Claim 10, characterized in that the second extrusion assembly (B) is composed of a sleeve (18) surrounding the sleeve (14) of the first extrusion assembly (A) with which it forms the second annular channel (20), and of a sleeve (19) for forming the lacunae, which sleeve, equipped at its downstream end with notches (24), is mounted on the sleeve (18) with the possibility of rotation and is connected to means (25-26) capable of pivoting it alternately in one direction or the other, and with an angular amplitude substantially equal to half the width of one mesh cell of the lacunary structure (2).

13. Die according to Claim 10, characterized in that the sleeve (19) for forming the lacunary structure is associated with a sleeve (40) placed downstream of it and linked to the means (25 to 26) controlling its longitudinal motions, whereas the facing edges of the two sleeves (19) and (40) are equipped with dentations (45-46) imbricating in each other, delimiting a jagged slit (47) interacting with the annulus (23) of the second die assembly.

14. Die according to Claim 10, characterized in that the second extrusion assembly (B) is composed of two coaxial sleeves (50, 51), delimiting between them the second annular channel (20) and, by divergent frustoconical bearing surfaces made at their downstream ends (53-54), an extrusion annulus (52), whereas, on the one hand, from each of the frustoconical bearing surfaces of the sleeves (50, 51) emerge radial notches (55-56) angularly spaced with the same angular spacing and, on the other hand, each sleeve (50, 51) is connected to means capable of pivoting it in the reverse direction of the other sleeve.

15. Die according to Claim 10, characterized in that the second extrusion assembly (B) is composed of two coaxial sleeves (60-61) forming between them the annular channel (20), and of an annular knife (64) which, having an outer diameter less than the internal diameter of the bore of the external sleeve (60) with which it delimits an extrusion annulus (62), is fitted, with offset, onto a tubular support (65) connected to means capable of driving it rotationally, whereas longitudinal notches (66), distributed with a constant angular spacing, emerge from one of the faces delimiting the extrusion annulus (62).
